(19) Europäisches Patentamt
European Patent Office
Office européen des brevets

(11) **EP 4 697 585 A1**

(12) **EUROPEAN PATENT APPLICATION**
published in accordance with Art. 153(4) EPC

(43) Date of publication:
**18.02.2026 Bulletin 2026/08**

(21) Application number: **24788636.9**

(22) Date of filing: **03.04.2024**

(51) International Patent Classification (IPC):
***H02P 29/68*** *(2016.01)*

(52) Cooperative Patent Classification (CPC):
**H02P 29/68**

(86) International application number:
**PCT/JP2024/013734**

(87) International publication number:
**WO 2024/214609 (17.10.2024 Gazette 2024/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.04.2023 JP 2023064013**

(71) Applicant: **DENSO CORPORATION**
**Kariya-city, Aichi 448-8661 (JP)**

(72) Inventors:
• **SAKAGUCHI, Koji**
**Kariya-city, Aichi 4488661 (JP)**
• **YAMADA, Jun**
**Kariya-city, Aichi 4488661 (JP)**
• **HORI, Fumitaka**
**Kariya-city, Aichi 4488661 (JP)**
• **NAKAYAMA, Seiji**
**Kariya-city, Aichi 4488661 (JP)**

(74) Representative: **Kuhnen & Wacker**
**Patent- und Rechtsanwaltsbüro PartG mbB**
**Prinz-Ludwig-Straße 40A**
**85354 Freising (DE)**

(54) **MOTOR CONTROL DEVICE**

(57) The motor control device (40) has a drive circuit (41) and a controller (50). The drive circuit (41) includes a driving element that switches current supply to a motor (10). The controller (50) includes a state acquirer (53) that acquires a driving state of the motor (10), a reference temperature calculation unit (581) that calculates an ambient temperature of the driving element as a reference temperature based on the detection value of a temperature sensor (45), and a temperature estimation unit (582) that estimates an element temperature, which is a temperature of the driving element. The temperature estimation unit (582) estimates the rise in temperature based on the motor's driving state and the reference temperature when it is determined that the motor is being driven, and estimates the drop in temperature based on the reference temperature when it is determined that the motor is not being driven. The temperature estimation unit (582) updates the estimated value of the element temperature based on the rise or drop in temperature.

**FIG. 2**

EP 4 697 585 A1

**Description**

CROSS REFERENCE TO RELATED APPLICATION

The present application is based on Japanese Patent Application No. 2023-064013 filed on April 11, 2023. The entire disclosure of which is incorporated herein by reference.

TECHNICAL FIELD

The present disclosure relates to a motor control device.

BACKGROUND

Conventionally, control devices for range switching mechanisms that switch shift ranges using a motor as a driving source are known. For example, in Patent Literature 1, the number of range switching operations performed consecutively within a short operation interval below a predetermined time is counted. When the count value reaches a predetermined value, the control switches from normal control to heat suppression control, temporarily prohibiting supply of electric current to the motor.

PRIOR ART LITERATURE

PATENT LITERATURE

Patent Literature: JP4999395B

SUMMARY OF THE INVENTION

However, in Patent Literature 1, temperature detection is not performed. Therefore, to ensure functionality even in high-temperature environments, it is necessary to set a stricter upper limit on the number of range switches, resulting in a reduction in the number of switches possible compared to original capability. Additionally, it may be difficult to directly detect a temperature of a driving element due to installation constraints. The object of the present disclosure is to provide a motor control device capable of appropriately estimating a temperature of a driving element.

A motor control device of the present disclosure includes a drive circuit with a drive element that switches power supply to a motor, and a controller that has a drive state acquisition unit acquiring the motor's drive state, a reference temperature calculation unit calculating the peripheral temperature of the drive element based on a temperature sensor, and a temperature estimation unit estimating the drive element's temperature, wherein the temperature estimation unit estimates temperature changes based on drive states and reference temperatures, updating the estimated element temperature accordingly.

The temperature estimation unit estimates the rise in temperature based on the motor's driving state and the reference temperature when it is determined that the motor is being driven, and estimates the drop in temperature based on the reference temperature when it is determined that the motor is not being driven. The temperature estimation unit updates the estimated value of the element temperature based on the rise or the drop in temperature. As a result, the temperature of the driving element can be appropriately estimated.

BRIEF DESCRIPTION OF DRAWINGS

The above and other objectives, features and advantages of the present disclosure will become more apparent from the following detailed description with reference to the accompanying drawings.

FIG. 1 is a schematic diagram illustrating a shift-by-wire system according to a fist embodiment.
FIG. 2 is a block diagram illustrating a controller according to the first embodiment.
FIG. 3 is a flowchart illustrating a temperature estimation process according to the first embodiment.
FIG. 4 is a timing chart explaining an initial value setting of an estimated element temperature according to the first embodiment.
FIG. 5 is an explanatory diagram illustrating an added value according to the first embodiment.
FIG. 6 is an explanatory diagram illustrating a subtracted value according to the first embodiment.
FIG. 7 is an explanatory diagram illustrating the subtracted value according to the first embodiment.
FIG. 8 is a flowchart illustrating a reference temperature setting process according to the first embodiment.
FIG. 9 is a flowchart illustrating a heat generation determination process according to the first embodiment.

DETAILED DESCRIPTION

First Embodiment

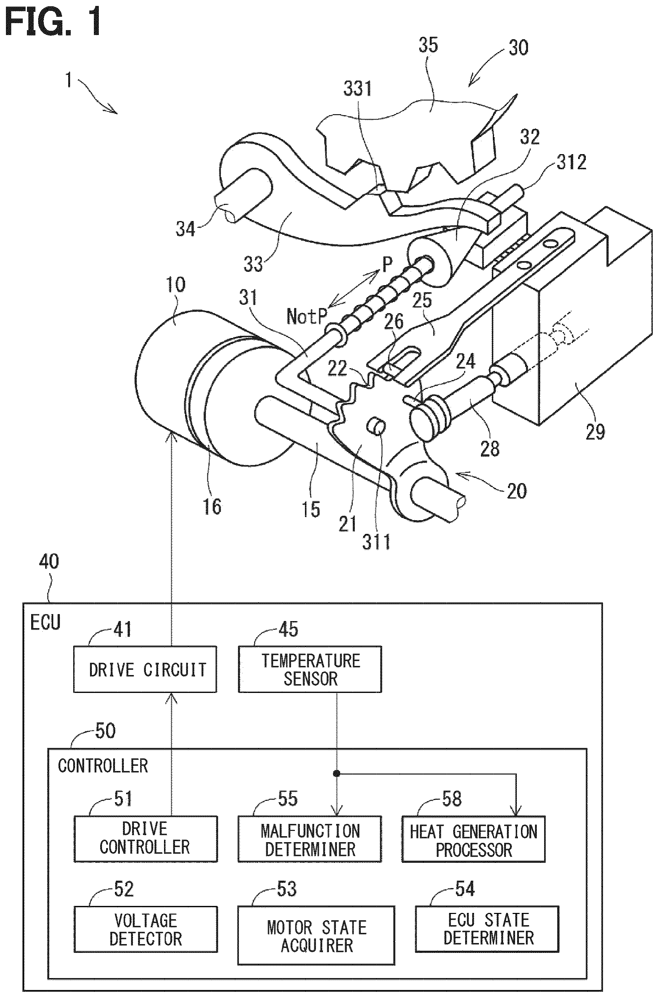

Hereinafter, a motor control device according to the present disclosure will be described with reference to the drawings. The motor control device according to the first embodiment is shown in FIGS. 1 to 9. As shown in FIG. 1, an ECU 40 as the motor control device is applied, for example, to a shift-by-wire system 1. The shift-by-wire system 1 includes a motor 10, a detent mechanism 20, a parking lock mechanism 30, and the ECU 40, among other components.

The motor 10 is, for example, a switched reluctance motor that rotates when power is supplied from a battery mounted on a vehicle (not shown), and functions as a driving source for the detent mechanism 20. The motor 10 is equipped with a rotation angle sensor, such as an encoder, to detect a rotational position.

The rotation of the motor 10 is transmitted to an output shaft 15 via a reduction gear (not shown). As a result, the rotation of the motor 10 is transmitted to the detent mechanism 20. The power shaft 15 is provided with an output shaft sensor 16 for detecting an angle of the output shaft 15.

The detent mechanism 20 includes components such as a detent plate 21, a detent spring 25, and a detent roller 26, and it transmits the rotational driving force output from the reduction gear to a manual valve 28 and a parking lock mechanism 30.

The detent plate 21 is fixed to the output shaft 15 and driven by the motor 10. On the detent spring 25 side of the detent plate 21, four valley portions 22 corresponding to P (parking), R (reverse), N (neutral), and D (drive) ranges are formed.

The detent plate 21 has a pin 24 protruding in parallel with the output shaft 15. The pin 24 is connected to the manual valve 28. The detent plate 21 is driven by the motor 10, whereby the manual valve 28 reciprocates in an axial direction. That is, the detent mechanism 20 converts the rotational motion of the motor 10 into a linear motion and transmits the linear motion to the manual valve 28. The manual valve 28 is provided on a valve body 29. The reciprocating movement of the manual valve 28 in the axial direction switches hydraulic pressure supply paths to a hydraulic clutch (not shown) to switch an engagement state of the hydraulic clutch, so that the shift range is switched.

The detent spring 25 is an elastically deformable plate-like member, and is provided with a detent roller 26 at a tip of the detent spring 25. The detent spring 25 urges the detent roller 26 toward the center of rotation of the detent plate 21. When a rotational force equal to or greater than a predetermined force is applied to the detent plate 21, the detent spring 25 is elastically deformed, and the detent roller 26 moves between the valley portions 22. When the detent roller 26 is fitted into any one of the valley portions 22, the swinging motion of the detent plate 21 is regulated, the axial position of the manual valve 28 and the state of the parking lock mechanism 30 are determined, and the shift range is fixed.

The parking lock mechanism 30 includes a parking rod 31, a cone 32, a parking lock pole 33, a shaft portion 34, and a parking gear 35. The parking rod 31 is generally L-shaped, and one end 311 side is fixed to the detent plate 21. The cone 32 is provided to the other end 312 side of the parking rod 31. The cone 32 is formed to reduce in diameter toward the other end 312.

The parking lock pole 33 comes into contact with a conical surface of the cone 32 and is provided so as to be swingable around the shaft portion 34. On the parking gear 35 side of the parking lock pole 33, a protrusion 331 that can mesh with the parking gear 35 is provided. When the cone 32 moves in a P direction due to the rotation of the detent plate 21, the parking lock pole 33 is pushed up and the protrusion 331 and the parking gear 35 mesh with each other. On the other hand, when the cone 32 moves in a NotP direction, the meshing between the protrusion 331 and the parking gear 35 is released.

The parking gear 35 is provided to an axle (not shown) and is enabled to mesh with the protrusion 331 of the parking lock pole 33. When the parking gear 35 meshes with the protrusion 331, rotation of the axle is restricted. When the shift range is one of the ranges (Not P range) other than the P range, the parking gear 35 is not locked by the parking lock pole 33. Therefore, the rotation of the axle is not restricted by the parking lock mechanism 30. When the shift range is the P range, the parking gear 35 is locked by the parking lock pole 33 and the rotation of the axle is restricted.

The ECU 40 includes a drive circuit 41, a thermistor 45, and a controller 50, among other components. The drive circuit 41 includes a drive element (not shown) and switches energization of motor windings by switching the drive element. The thermistor 45 is mounted on the same board as the drive element and detects a board temperature as an ambient temperature of the drive element.

The controller 50 is mainly composed of a microcomputer, and internally includes a CPU, a ROM, a RAM, an I/O, and a bus line (not shown) for connecting these components. Each processing executed by the controller 50 may be software processing which is implemented by causing the CPU to execute a program stored in a memory device such as a ROM (i.e., computer-readable non-transitory tangible storage medium) or may be hardware processing which is implemented by a special purpose electronic circuit.

The controller 50 includes a drive controller 51, a voltage detector 52, a motor state acquirer 53, an ECU state determiner 54, a malfunction determiner 55, and a heat generation processor 58, among others. The drive controller 51 controls driving of the motor 10 by controlling the on-off operation of drive elements in the drive circuit 41. The voltage detector 52 detects an applied voltage V that is applied to the drive circuit 41. In the present embodiment, a battery voltage detected by a voltage sensor (not shown) is used as the applied voltage V.

The motor state acquirer 53 acquires drive state of the motor 10. The drive state of the motor 10 includes whether the motor 10 is being driven, and if the motor is being driven, it includes information such as the drive mode and the shift range before and after switching. The ECU state determiner 54 determines a startup state of the ECU 40. After the ECU 40 termination determination, a termination processing execution time allows the controller 50 to perform various processes such as a termination process. The malfunction determiner 55 detects malfunction in the thermistor 45.

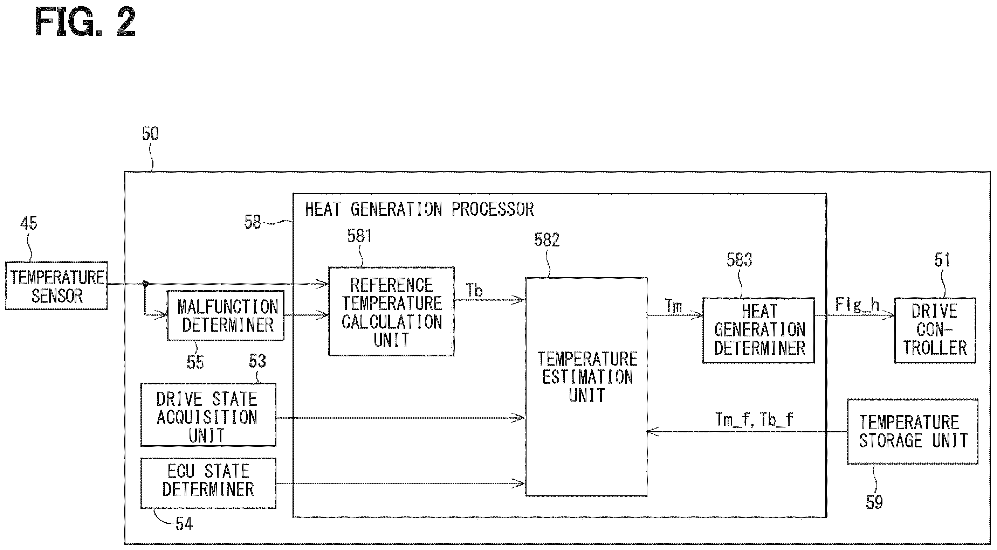

As shown in FIG. 2, the heat generation processor 58 includes a reference temperature calculation unit 581, a temperature estimation unit 582, and a heat generation determiner 583. The reference temperature calculation unit 581 calculates a reference temperature Tb based on the detected value of the thermistor 45. In the present embodiment, the reference temperature Tb is the substrate temperature. The calculation of the reference temperature Tb will be described later.

The temperature estimation unit 582 estimates the temperature of the drive element based on the reference temperature Tb, the malfunction determination of the thermistor 45, and the driving state of the motor 10. Hereinafter, the estimated value of the drive element temperature will be referred to as the estimated element temperature Tm. The heat generation determiner 583 determines heat generation of the drive element based on the estimated element temperature Tm.

Herein, in the shift-by-wire system 1, if the driver frequently repeats unnecessary range switching operations, there is a risk that the temperature of the motor 10 and the drive element may rise. For example, to reduce the temperature rise, the number of times the operations are performed consecutively within short intervals is counted, and when the count value reaches a predetermined value, the control is switched from normal control to heat generation suppression control (such as prohibiting motor energization). However, when switching to heat generation suppression control based on the count value without temperature detection, it is necessary to set the number of times strictly so that it can be valid even under high-temperature environments. This results in a reduction in the allowable number of switches compared to what would otherwise be possible.

Additionally, if the heat generation of the drive element is more critical than that of the motor 10, the allowable number of switches may be further limited in anticipation of the drive element's heat generation. However, measuring the temperature of the drive element itself is challenging in terms of installation. Therefore, in the present embodiment, by estimating the temperature of the drive element from the reference temperature Tb and performing heat generation determination based on the estimated element temperature Tm, it is possible to achieve an appropriate number of allowable switches. This approach increases the number of feasible operations compared to switching to heat generation suppression control based solely on the count value.

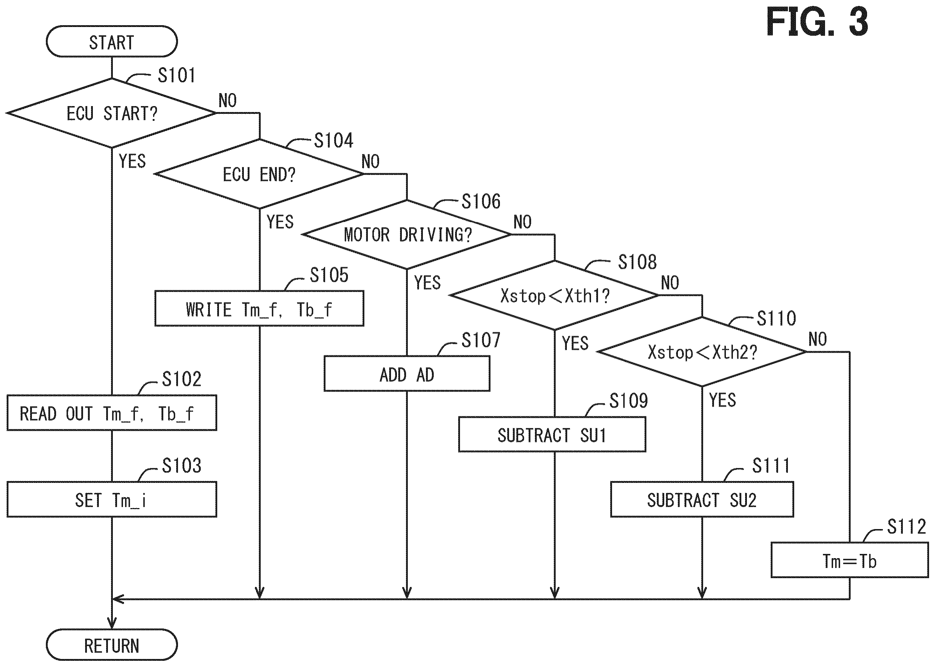

The temperature estimation process of the present embodiment will be explained based on a flowchart in FIG. 3. This process is carried out by the controller 50 at a predetermined cycle. Hereinafter, "step" may be simply referred to as a symbol "S".

In S101, the controller 50 determines whether the ECU 40 is being started. When it is determined that the ECU 40 is not being started (S101: NO), the process proceeds to S104. When it is determined that the ECU 40 is being started (S101: YES), the process proceeds to S102, where an end element temperature Tm_f (end-time element) and an end reference temperature Tb_f written in S105 are read out.

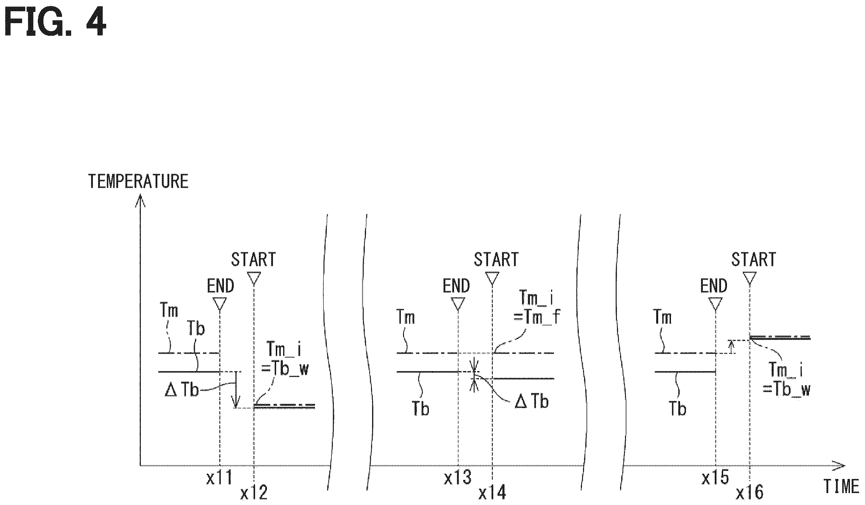

In S103, the heat generation processor 58 sets an initial value Tm_i of an element temperature. The setting of the initial value Tm_i will be explained with reference to FIG. 4. In FIG. 4, a horizontal axis represents time and a vertical axis represents temperature, but a time scale does not necessarily match an actual scale. Additionally, the reference temperature Tb is shown as a solid line, and the estimated element temperature Tm is shown as a dash-dot-dash line. The reference temperature when the ECU 40 is powered off is referred to as an end reference temperature Tb_f, while the reference temperature when the ECU 40 is powered on is referred to as a startup reference temperature Tb_w. A value obtained by subtracting the startup reference temperature Tb_w from the end reference temperature Tb_f is defined as a reference temperature drop amount $\Delta$Tb (see equation (1)).

$$\Delta Tb = Tb\_f - Tb\_w \quad ... (1)$$

When the ECU 40 is powered off at time point x11 and powered on at time point x12, if the reference temperature drop amount $\Delta$Tb is greater than a temperature drop determination threshold Tb_th, it is likely that sufficient time has passed since the previous power-off for the driving element to cool down. Consequently, the estimated element temperature Tm, which rose due to the power supply, is highly likely to have decreased to a level approximately equal to the reference temperature Tb. Therefore, the initial value of the element temperature Tm_i is set to the startup reference temperature Tb_w.

When the ECU 40 is powered off at time point x13 and powered on at time point x14, if the reference temperature drop amount $\Delta$Tb is less than or equal to the temperature drop determination threshold Tb_th, it is likely that not much time has passed since the previous power-off. Consequently, the estimated element temperature Tm, which rose due to the power supply, is highly likely to have not decreased to the reference temperature Tb. Therefore, the initial value of the element temperature Tm_i is set to the end element temperature Tm_f.

When the ECU 40 is powered off at time point x15 and powered on at time point x16, if the startup reference temperature Tb_w is higher than the end reference temperature Tb_f due to an increase in ambient temperature or other factors, the initial value of the element temperature Tm_i is set to the higher value between the end element temperature Tm_f and the startup reference temperature Tb_w. In this example, since Tm_f < Tb_w, the initial value of the element temperature Tm_i is set to the startup reference temperature Tb_w.

Returning to FIG. 3, in S104, to which the process transitions after a negative determination in S101, the controller 50 determines whether it is an end time of the ECU 40. When it is determined that it is the end time of the ECU 40 (S104: YES), the process proceeds to S105, where the current element temperature is written to a temperature storage unit 59, which is a non-volatile memory, as the end element temperature Tm_f, and the reference temperature is written as the end reference temperature Tb_f. When it is determined that it is not the end time of the ECU 40 (S104: NO), the process proceeds to S106.

In S106, the heat generation processor 58 determines whether the motor 10 has been driven. When it is determined that the motor 10 has not been driven (S106: NO), the process proceeds to S108. When it is determined that the motor 10 has been driven (S106: YES), the process proceeds to S107.

In S107, the heat generation processor 58 reads an added value AD, adds the added value AD to the previous value of the estimated element temperature Tm, and sets it as the current value of the estimated element temperature Tm (see equation (2)). A subscript (n) denotes the current value, and (n-1) denotes the previous value.

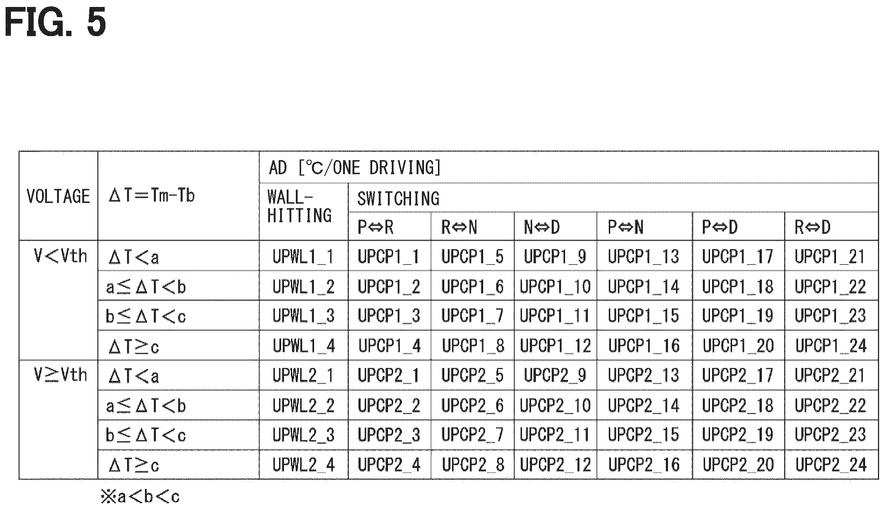

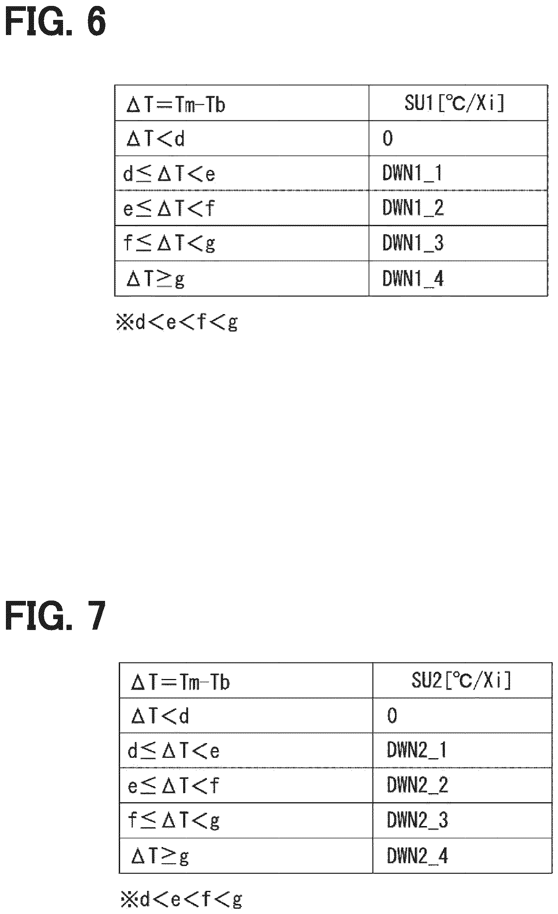

The added value AD is a value set based on the temperature rise of the driving element during one drive of the motor 10, for example, during one range shift. As shown in FIG. 5, the added value AD is calculated using an applied voltage V, a temperature deviation $\Delta T$, which is a value obtained by subtracting the reference temperature Tb from the estimated element temperature Tm (see equation (3)), and the driving state of the motor 10 as arguments. A map in FIG. 5 is just an example, and the number of thresholds and other settings can be adjusted as needed. The same applies to FIG. 6 and FIG. 7.

$$Tm_{(n)} = Tm_{(n-1)} + AD \ldots (2)$$

$$\Delta T = Tm - Tb \ldots (3)$$

When the applied voltage V is less than a voltage determination threshold Vth, an upper map is used, with the addition value AD during wall-hitting drive set to UPWL1 and the addition value AD during switching drive set to UPCP1. When the applied voltage V is greater than or equal to the voltage determination threshold Vth, a lower map is used, with the addition value AD during wall-hitting drive set to UPWL2 and the addition value AD during switching drive set to UPCP2. Since the estimated element temperature Tm tends to rise when the applied voltage V is high, the value UPWL2 is relatively larger than the value UPWL1, and the value UPCP2 is relatively larger than the value UPCP1.

A magnitude relationship of the thresholds a, b, and c related to the temperature deviation $\Delta T$ is a < b < c. In other words, when $\Delta T$ < a, a difference between the estimated element temperature Tm and the reference temperature Tb is relatively small, and when $\Delta T \geq c$, a difference between the estimated element temperature Tm and the reference temperature Tb is relatively large. For example, when the applied voltage V is less than Vth and the motor 10 is in a wall-hitting drive state, the addition value AD is UPWL1_1 when $\Delta T$ < a, which is the largest, followed by UPWL1_2, UPWL1_3, and the value UPWL1_4 when $\Delta T \geq c$, which is the smallest. In other words, when the ambient temperature is low relative to the driving element temperature, the driving element is less likely to increase in temperature due to the current, so the addition value AD is made relatively small. In a case where the applied voltage V is greater than or equal to Vth, the same applies to cases other than the wall-hitting drive.

The driving states of the motor 10 include wall-hitting drive and switching drive for each range. In the wall-hitting drive, the detent roller 26 is moved to a driving limit on the P side or the D side, and a wall position is learned as the reference position. In the wall-hitting drive, to reduce the impact when the detent roller 26 contacts the wall, torque suppression control is used, resulting in greater heat generation compared to normal range switching drive (range-switching driving). Therefore, when the applied voltage V and the temperature deviation $\Delta T$ are the same, the increment value AD = UPLW during the wall-hitting drive is relatively larger than the increment value AD = UPCP during switching.

In the switching drive for each range, increment values corresponding to the range switching angles are set. For example, during P-D switching, a switching angle is larger than that of other range switches, resulting in a longer energization time. Therefore, the increment value during P-D switching is set to be relatively larger than the increment values AD during other range switches. Additionally, for example, when the R-N switching angle and the N-D switching angle are equal, the values may also be the same, such as UPCP1_5 = UPCP1_9. It can also be understood that the larger the switching angle, the longer the switching time, and thus the increment value AD is set according to the range switching time. Additionally, instead of using map calculations, the increment value AD may be determined through mathematical calculations using factors such as range switching angles and range switching times.

Returning to FIG. 3, in S108 where the process proceeds after a negative determination in S106, the heat generation processor 58 determines whether the elapsed time point Xstop since the motor 10 stopped driving is less than a first stop determination time point Xth1. When it is determined that the elapsed time point Xstop since the motor stopped driving is less than the first stop determination time point Xth1 (S108: YES), the process proceeds to S109. In S109, the heat generation processor 58 reads a subtracted value SU1, subtracts the subtracted value SU1 from the previous value of the estimated element temperature Tm, and sets this as the current value of the estimated element temperature Tm (equation (4)).

When it is determined that the elapsed time point Xstop since the motor 10 stopped driving is greater than or equal to the first stop determination time point Xth1 (S108: NO), the process proceeds to S110. In S110, the heat generation processor 58 determines whether the elapsed time point Xstop since the motor 10 stopped driving is less than a second stop determination time point Xth2. The second stop determination time point Xth2 is set to a value larger than the first stop determination time point Xth1. When it is determined that the elapsed time point Xstop since the motor stopped driving is greater than or equal to the first stop determination time point Xth1 and less than the second stop determination time point Xth2 (S110: YES), the process proceeds to S111. In S111, the heat generation processor 58 reads a subtracted value SU2, subtracts the subtracted value SU2 from the previous value of the estimated element temperature Tm, and sets the result as the current value of the estimated element temperature Tm (equation (5)). When it is determined that the elapsed time point Xstop since the motor stopped driving is greater than or equal to the second stop determination time point Xth2 (S110: NO), the process proceeds to S112, where the estimated element temperature Tm is set to the reference temperature Tb.

$$Tm_{(n)} = Tm_{(n-1)} - SU1 \quad ... (4)$$

$$Tm_{(n)} = Tm_{(n-1)} - SU2 \quad ... (5)$$

The subtracted values SU1 and SU2 are values set according to the elapsed time point Xstop since the motor 10 stopped driving. Immediately after the motor 10 stops driving, the decrease in the estimated element temperature per unit time point Xi (for example, 0.5 [s]) is relatively large, and as time elapses after the motor stops, the decrease becomes smaller. Therefore, in the present embodiment, the subtracted value is set to be larger when the elapsed time point Xstop since the motor 10 stopped driving is shorter, according to the elapsed time since the motor stopped. That is, when the temperature deviation $\Delta T$ is equal, SU1 > SU2. Here, the subtracted value SU is set in two stages, but it may also be set in three or more stages, or the subtracted value SU may be determined using a mathematical formula based on the elapsed time point Xstop.

The subtracted value SU1 is shown in FIG. 6, and the subtracted value SU2 is shown in FIG. 7. A magnitude relationship of the thresholds d, e, f, and g related to the temperature deviation $\Delta T$ is d < e < f < g. In other words, when $\Delta T < d$, a difference between the estimated element temperature Tm and the reference temperature Tb is relatively small, and when $\Delta T \geq g$, a difference between the estimated element temperature Tm and the reference temperature Tb is relatively large.

As shown in FIG. 6, when $\Delta T < d$, the subtracted value SU1 is set to 0. Additionally, in ascending order, the values are DWN1_1, DWN1_2, and DWN1_3, with the value DWN1_4 being the largest when $\Delta T \geq g$. As shown in FIG. 7, when $\Delta T < d$, the subtracted value SU2 is set to 0. Additionally, in ascending order, the values are DWN2_1, DWN2_2, and DWN2_3, with the value DWN2_4 being the largest when $\Delta T \geq g$. That is, when the ambient temperature is lower than the driving element temperature, the temperature tends to decrease more easily in a non-energized state, so the subtracted value SU is made relatively larger.

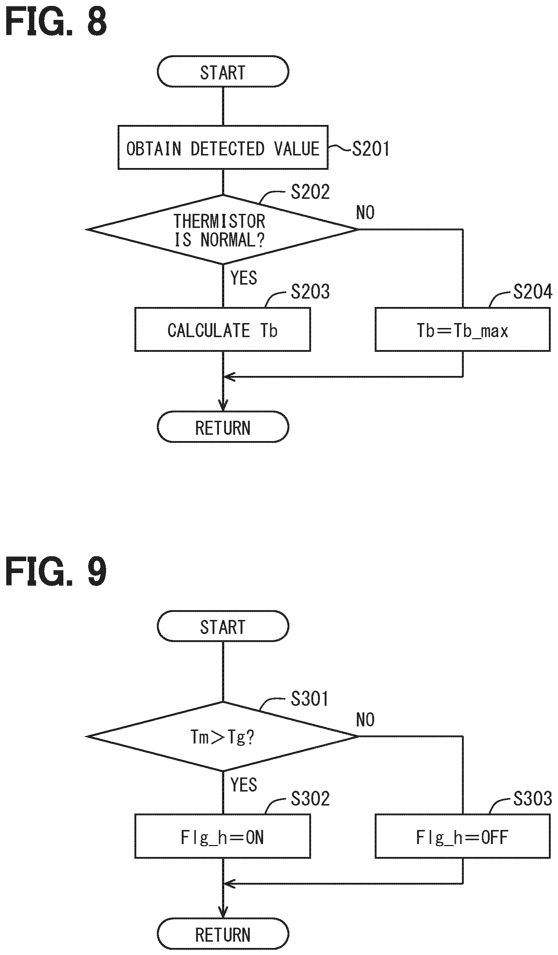

The reference temperature setting process will be explained based on a flowchart in FIG. 8. In S201, the reference temperature calculation unit 581 obtains the detected value from the thermistor 45. In S202, the reference temperature calculation unit 581 determines whether the detected value from the thermistor 45 is normal. When it is determined that the detected value from the thermistor 45 is normal (S202: YES), the process proceeds to S203. When it is determined that the detected value from the thermistor 45 is abnormal (S202: NO), the process proceeds to S204.

In S203, the reference temperature calculation unit 581 calculates the reference temperature Tb based on the detected value from the thermistor 45. When the thermistor 45 is composed of multiple (for example, two) detection elements, an average value is used as the reference temperature Tb. Additionally, a calculated value or a representative value other than the average value may be used as the reference temperature Tb.

In S204, the reference temperature calculation unit 581 sets the reference temperature Tb to a predetermined value without using the detected value from the thermistor 45. In the present embodiment, the highest temperature Tb_max (for example, 90 [degrees Celsius]) detected when the thermistor 45 is in a normal state is used as the reference temperature Tb. As a result, even if the thermistor 45 fails, it is still possible to estimate the temperature of the drive element. Additionally, by assuming a worst-case scenario and setting the reference temperature Tb to the highest temperature Tb_max, thermal destruction of the drive element can be prevented. The set reference temperature Tb is used in the calculation of the estimated element temperature Tm.

The heat generation determination process will be explained based on a flowchart in FIG. 9. In S301, the heat generation determiner 583 determines whether the estimated element temperature Tm is higher than a guard temperature Tg. The guard temperature Tg is set according to the temperature at which thermal destruction of the drive element occurs, so as to prevent thermal destruction of the drive element. It is determined whether the estimated element temperature Tm is higher than the guard temperature Tg. When it is determined that the estimated element temperature Tm is higher than the guard temperature Tg (S301: YES), the process proceeds to S302, and a heat generation determination flag Flg_h is turned on. When it is determined that the estimated element temperature Tm is equal to or lower than the guard temperature Tg (S301: NO), the process proceeds to S303, and the heat generation determination flag Flg_h is turned off.

The heat generation determination flag Flg_h is sent to the drive controller 51. In the drive controller 51, when the heat generation determination flag Flg_h is off, the range switching is performed under normal control, and when the heat generation determination flag Flg_h is on, the heat generation suppression control is applied. In the present embodiment, the range switching is prohibited as part of the heat generation suppression control.

As described above, the ECU 40 includes the drive circuit 41 and the controller 50. The drive circuit 41 includes the driving element that switches the current supply to the motor 10. The controller 50 includes the motor state acquirer 53 that acquires the driving state of the motor 10, the reference temperature calculation unit 581 that calculates the ambient temperature of the driving element as the reference temperature Tb based on the detection value of the thermistor 45, and the temperature estimation unit 582 that estimates the element temperature, which is the temperature of the driving element.

The temperature estimation unit 582 estimates the rise in temperature based on the motor's driving state and the reference temperature Tb when it is determined that the motor is being driven, and estimates the drop in temperature based on the reference temperature Tb when it is determined that the motor is not being driven. The temperature estimation unit 582 updates the estimated element temperature Tm, which is the estimated value of the element temperature, based on the addition value AD or the subtracted value SU. More specifically, the estimated element temperature Tm is calculated by adding the addition value AD or subtracting the subtracted value SU.

As a result, the temperature of the driving element can be appropriately estimated. For example, when the ECU 40 is applied to the shift-by-wire system 1, by estimating the element temperature, the number of allowable range switches in a short period can be increased in the temperature range normally used, compared to a case where the upper limit of the number of range switches is set under the worst-case scenario without estimating the element temperature.

The addition value AD used for estimating the element temperature when it is determined that motor driving is executed is estimated based on the temperature deviation ΔT, which is the difference between the estimated element temperature Tm and the reference temperature Tb. Here, the estimated element temperature Tm used in the calculation of the addition value AD can be considered as the previous value or the initial value, and the current value of the estimated element temperature Tm is calculated using the addition value AD. In the present embodiment, the addition value AD is the value per drive of the motor 10, which is intermittently driven, and in the shift-by-wire system 1, it is the value per range switch or per each contact with a stopper. As a result, the estimated element temperature Tm during motor driving can be calculated using relatively simple computations without the need for electric current detection values or the like.

The controller 50 has the voltage detector 52 that detects the applied voltage applied to the drive circuit 41. The addition value AD is estimated based on the applied voltage V. As a result, the estimated element temperature Tm during motor driving can be calculated more accurately.

The driving state of the motor 10 includes the range switching angle or the range switching time. The addition value AD is estimated based on the range switching angle or the range switching time in the current range switching. Additionally, the driving state of the motor 10 includes the range switching drive and the wall-hitting drive. The addition value AD is estimated based on whether the driving state of the motor 10 is the range switching drive or the wall-hitting drive. As a result, the temperature of the driving element in the shift-by-wire system 1 can be estimated with high accuracy, thereby increasing the number of possible switching operations.

The subtracted value SU, which is used for estimating the element temperature when it is determined that no motor drive is executed, is estimated based on the difference between the estimated element temperature Tm and the reference temperature Tb. Here, the estimated element temperature Tm used in the calculation of the subtracted value SU can be considered as the previous value or the initial value, and the current value of the estimated element temperature Tm is calculated using the subtracted value SU. Additionally, the subtracted value SU is estimated based on the elapsed time point Xstop since the motor 10 stopped driving, with the subtracted value SU increasing as the elapsed time point Xstop decreases. As a result, the estimated element temperature Tm can be appropriately calculated when the motor is not being driven.

The controller 50 has the malfunction determiner 55 that determines malfunction of the thermistor 45. The temperature estimation unit 582 sets the reference temperature Tb to a predetermined value when the thermistor 45 malfunctions. In the present embodiment, the predetermined value is set according to the worst-case conditions and is designated as the maximum temperature Tb_max. As a result, even if the thermistor 45 malfunctions, it is possible to continue the range switching while preventing thermal destruction of the driving element.

The motor 10 is an actuator involved in switching the shift range, and when the estimated element temperature Tm is higher than the guard temperature Tg, the range switching may be prohibited. As a result, thermal destruction of the driving element can be prevented.

The controller 50 includes the temperature storage unit 59 that stores the element temperature at the time when the ECU 40 is powered off, referred to as the final element temperature Tm_f, and the reference temperature at the time when the power is turned off, referred to as the final reference temperature Tb_f.

The temperature estimation unit 582 sets the initial value of the element temperature Tm_i at the time of power-on to the startup reference temperature Tb_w, which is the reference temperature at the time of power-on, when the decrease in the reference temperature during the period from when the ECU 40 is turned off to when it is turned on again is greater than the determination threshold, i.e., when the reference temperature decrease $\Delta Tb > Tb\_th$. Furthermore, the temperature estimation unit 582 sets the initial value of the element temperature Tm_i at the time of power-on to the final element temperature Tm_f when the decrease in the reference temperature during the period from when the ECU 40 is turned off to when it is turned on again is less than or equal to the determination threshold, i.e., when $0 \leq \Delta Tb \leq Tb\_th$.

Furthermore, since the element temperature does not fall below the reference temperature, the temperature estimation unit 582 sets the initial value of the element temperature Tm_i at the time of power-on to the startup reference temperature Tb_w when the startup reference temperature Tb_w is higher than the final element temperature Tm_f. As a result, the initial value of the element temperature Tm_i at the time of power-on can be appropriately set, and the estimated element temperature Tm can be accurately calculated.

Additionally, regardless of the reference temperature decrease $\Delta Tb$, the initial value of the element temperature Tm_i at the time of power-on may be set to the final element temperature Tm_f. As a result, thermal destruction can be prevented even if the ECU 40 is restarted immediately.

In the first embodiment, the ECU 40 corresponds to a "motor control device," the thermistor 45 to a "temperature sensor," and the motor state acquirer 53 to a "drive state acquisition unit." Additionally, the addition value AD corresponds to a "rising temperature," the subtracted value SU to a "falling temperature," the temperature drop determination threshold Tb_th to a "determination threshold (related to the determination of the amount of temperature drop)," the guard temperature Tg to a "high temperature determination threshold," and the wall-hitting drive to a "reference position learning drive."

Other Embodiments

In the first embodiment, an SR motor was exemplified as the motor. In other embodiments, the motor may be a brushless DC motor or another type of motor, rather than an SR motor. In the first embodiment, the temperature sensor is a thermistor. In other embodiments, the temperature sensor may be something other than a thermistor. Additionally, in the first embodiment, the temperature sensor is mounted on the same substrate as the driving element. In other embodiments, as long as the ambient temperature of the driving element can be detected, the temperature sensor may be provided in a location other than being mounted on the same substrate as the driving element. Additionally, temperature information used in other devices may be obtained through communication or other means and utilized.

In the first embodiment, the detent plate has four depressions formed corresponding to each range. In other embodiments, the number of depressions on the detent plate is not limited to four and may be any number of two or more. Additionally, the configuration and arrangement of the detent mechanism and the parking lock mechanism may differ from those in the first embodiment.

In the first embodiment, the motor control device is applied to a shift-by-wire system related to switching shift ranges. In other embodiments, the motor control device may be applied to in-vehicle devices other than the shift-by-wire system. Additionally, it may be applied to devices other than in-vehicle devices.

"The motor is an actuator for switching a shift range, the drive state of the motor includes range-switching driving and reference-position learning driving, and the rise in temperature is estimated based on whether the drive state is the range-switching driving or the reference-position learning driving." This disclosure may be combined with the various disclosures related to the motor control device.

"The drop in temperature is estimated based on a difference between the element temperature and the reference temperature." This disclosure may be combined with the various disclosures related to the motor control device.

"The controller further includes a malfunction determiner (55) configured to determine a malfunction of the temperature sensor, and the temperature estimation unit is configured to set the reference temperature to a predetermined value when a malfunction of the temperature sensor is determined." This disclosure may be combined with the various disclosures related to the motor control device.

"The motor is an actuator for switching a shift range, and range switching is prohibited when the estimated value of the element temperature exceeds a high-temperature determination threshold." This disclosure may be combined with the various disclosures related to the motor control device.

"The controller further includes a temperature storage unit (59) configured to store an end-time element temperature, which is an estimated value of the element temperature when the power supply is turned off, and the temperature estimation unit is configured to set an initial value of the element temperature at power-on to the end-time element temperature." This disclosure may be combined with the various disclosures related to the motor control device.

"The controller further includes a temperature storage unit (59) configured to store an end-time element temperature, which is an estimated value of the element temperature when the power supply is turned off, and an end-time reference temperature, which is the reference temperature when the power supply is turned off, and the temperature estimation unit is configured to: set an initial value of the element temperature at power-on to a power-on reference temperature when a temperature decrease amount of the reference temperature between power-off and power-on exceeds a determination threshold; and set the initial value to the end-time element temperature when the temperature decrease amount is equal to or less than the determination threshold." This disclosure may be combined with the various disclosures related to the motor control device.

"The controller further includes a temperature storage unit (59) configured to store an end-time element temperature, which is an estimated value of the element temperature when the power supply is turned off, and the temperature estimation unit is configured to set an initial value of the element temperature at power-on to a power-on reference temperature when the power-on reference temperature is higher than the end-time element temperature." This disclosure may be combined with the various disclosures related to the motor control device.

The control unit and the technique according to the present disclosure may be achieved by a dedicated computer provided by constituting a processor and a memory programmed to execute one or more functions embodied by a computer program. Alternatively, the controller described in the present disclosure and the method thereof may be implemented by a dedicated computer configured as a processor with one or more dedicated hardware logic circuits. Alternatively, the controller and method described in the present disclosure may be implemented using one or more dedicated computers, which include a combination of a processor consisting of one or more hardware logic circuits, and a processor and memory programmed to perform one or more functions. The computer programs may be stored, as instructions to be executed by a computer, in a tangible non-transitory computer-readable medium. The present disclosure is not limited to the embodiment described above but various modifications may be made within the scope of the present disclosure.

The present disclosure has been made in accordance with the embodiments. However, the present disclosure is not limited to such embodiments and configurations. The present disclosure also includes various modification examples and modifications within the scope of equivalents. Furthermore, various combination and formation, and other combination and formation including one, more than one or less than one element may be made in the present disclosure.

**Claims**

1. A motor control device comprising:

   a drive circuit (41) having a drive element configured to switch power supply to a motor (10); and
   a controller (50) including:

       a drive state acquisition unit (53) configured to acquire a drive state of the motor;
       a reference temperature calculation unit (581) configured to calculate a peripheral temperature of the drive element as a reference temperature based on a detection value of a temperature sensor (45); and
       a temperature estimation unit (582) configured to estimate an element temperature, which is a temperature of the drive element, wherein

   the temperature estimation unit is configured to:

       estimate a rise in temperature based on the drive state of the motor and the reference temperature when it is determined that motor drive is being performed;
       estimate a drop in temperature based on the reference temperature when it is determined that motor drive is not being performed; and
       update the estimated value of the element temperature based on the rise in temperature or the drop in temperature.

2. The motor control device according to claim 1, wherein
   the rise in temperature is estimated based on a difference between the element temperature and the reference temperature.

3. The motor control device according to claim 2, wherein

   the controller further includes a voltage detector (52) for detecting an applied voltage to the drive circuit, and
   the rise in temperature is estimated based on the applied voltage.

4. The motor control device according to any one of claims 1 to 3, wherein

   the motor is an actuator for switching a shift range,
   the drive state of the motor includes a range switching angle, and
   the rise in temperature is estimated based on the range switching angle in a current range-switching operation.

5. The motor control device according to any one of claims 1 to 3, wherein

the motor is an actuator for switching a shift range,
the drive state of the motor includes a range switching time, and
the rise in temperature is estimated based on the range switching time in a current range-switching operation.

6. The motor control device according to any one of claims 1 to 3, wherein

the motor is an actuator for switching a shift range,
the drive state of the motor includes range-switching driving and reference-position learning driving, and
the rise in temperature is estimated based on whether the drive state is the range-switching driving or the reference-position learning driving.

7. The motor control device according to claim 1, wherein
the drop in temperature is estimated based on a difference between the element temperature and the reference temperature.

8. The motor control device according to claim 7, wherein
the drop in temperature is estimated to increase as an elapsed time after driving of the motor ends decreases.

9. The motor control device according to claim 1, wherein

the controller further includes a malfunction determiner (55) configured to determine a malfunction of the temperature sensor, and
the temperature estimation unit is configured to set the reference temperature to a predetermined value when a malfunction of the temperature sensor is determined.

10. The motor control device according to claim 1, wherein

the motor is an actuator for switching a shift range, and
range switching is prohibited when the estimated value of the element temperature exceeds a high-temperature determination threshold.

11. The motor control device according to claim 1, wherein

the controller further includes a temperature storage unit (59) configured to store an end-time element temperature, which is an estimated value of the element temperature when the power supply is turned off, and
the temperature estimation unit is configured to set an initial value of the element temperature at power-on to the end-time element temperature.

12. The motor control device according to claim 1, wherein

the controller further includes a temperature storage unit (59) configured to store an end-time element temperature, which is an estimated value of the element temperature when the power supply is turned off, and an end-time reference temperature, which is the reference temperature when the power supply is turned off, and
the temperature estimation unit is configured to:

set an initial value of the element temperature at power-on to a power-on reference temperature when a temperature decrease amount of the reference temperature between power-off and power-on exceeds a determination threshold; and
set the initial value to the end-time element temperature when the temperature decrease amount is equal to or less than the determination threshold.

13. The motor control device according to claim 1, wherein

the controller further includes a temperature storage unit (59) configured to store an end-time element temperature, which is an estimated value of the element temperature when the power supply is turned off, and
the temperature estimation unit is configured to set an initial value of the element temperature at power-on to a power-on reference temperature when the power-on reference temperature is higher than the end-time element temperature.

# FIG. 1

ECU 40

| 41 DRIVE CIRCUIT | 45 TEMPERATURE SENSOR |

CONTROLLER 50

| 51 DRIVE CONTROLLER | 55 MALFUNCTION DETERMINER | 58 HEAT GENERATION PROCESSOR |

| 52 VOLTAGE DETECTOR | 53 MOTOR STATE ACQUIRER | 54 ECU STATE DETERMINER |

# FIG. 2

**FIG. 3**

EP 4 697 585 A1

# FIG. 4

# FIG. 5

| VOLTAGE | ΔT=Tm-Tb | AD [°C/ONE DRIVING] | | | | | | |
| --- | --- | --- | --- | --- | --- | --- | --- | --- |
| | | WALL-HITTING | SWITCHING | | | | | |
| | | | P⇔R | R⇔N | N⇔D | P⇔N | P⇔D | R⇔D |
| V<Vth | ΔT<a | UPWL1_1 | UPCP1_1 | UPCP1_5 | UPCP1_9 | UPCP1_13 | UPCP1_17 | UPCP1_21 |
| | a≤ΔT<b | UPWL1_2 | UPCP1_2 | UPCP1_6 | UPCP1_10 | UPCP1_14 | UPCP1_18 | UPCP1_22 |
| | b≤ΔT<c | UPWL1_3 | UPCP1_3 | UPCP1_7 | UPCP1_11 | UPCP1_15 | UPCP1_19 | UPCP1_23 |
| | ΔT≥c | UPWL1_4 | UPCP1_4 | UPCP1_8 | UPCP1_12 | UPCP1_16 | UPCP1_20 | UPCP1_24 |
| V≥Vth | ΔT<a | UPWL2_1 | UPCP2_1 | UPCP2_5 | UPCP2_9 | UPCP2_13 | UPCP2_17 | UPCP2_21 |
| | a≤ΔT<b | UPWL2_2 | UPCP2_2 | UPCP2_6 | UPCP2_10 | UPCP2_14 | UPCP2_18 | UPCP2_22 |
| | b≤ΔT<c | UPWL2_3 | UPCP2_3 | UPCP2_7 | UPCP2_11 | UPCP2_15 | UPCP2_19 | UPCP2_23 |
| | ΔT≥c | UPWL2_4 | UPCP2_4 | UPCP2_8 | UPCP2_12 | UPCP2_16 | UPCP2_20 | UPCP2_24 |

※a<b<c

# FIG. 6

| $\triangle T = Tm-Tb$ | SU1 [°C/Xi] |
|---|---|
| $\triangle T < d$ | 0 |
| $d \leq \triangle T < e$ | DWN1_1 |
| $e \leq \triangle T < f$ | DWN1_2 |
| $f \leq \triangle T < g$ | DWN1_3 |
| $\triangle T \geq g$ | DWN1_4 |

※d<e<f<g

# FIG. 7

| $\triangle T = Tm-Tb$ | SU2 [°C/Xi] |
|---|---|
| $\triangle T < d$ | 0 |
| $d \leq \triangle T < e$ | DWN2_1 |
| $e \leq \triangle T < f$ | DWN2_2 |
| $f \leq \triangle T < g$ | DWN2_3 |
| $\triangle T \geq g$ | DWN2_4 |

※d<e<f<g

## FIG. 8

```
          ( START )
              │
              ▼
  ┌──────────────────────┐
  │ OBTAIN DETECTED VALUE │──S201
  └──────────────────────┘
              │
              ▼          S202
           ╱──────────╲        NO
          ╱ THERMISTOR ╲──────────────┐
          ╲ IS NORMAL? ╱               │
           ╲──────────╱                │
              │ YES                    │
              │    S203                │    S204
  ┌──────────────────┐    ┌──────────────────┐
  │   CALCULATE Tb   │    │    Tb=Tb_max     │
  └──────────────────┘    └──────────────────┘
              │                        │
              ├────────────────────────┘
              ▼
          ( RETURN )
```

## FIG. 9

```
          ( START )
              │
              ▼          S301
           ╱──────────╲        NO
          ╱            ╲──────────────┐
          ╲   Tm>Tg?   ╱               │
           ╲──────────╱                │
              │ YES                    │
              │    S302                │    S303
  ┌──────────────────┐    ┌──────────────────┐
  │    Flg_h=ON      │    │    Flg_h=OFF     │
  └──────────────────┘    └──────────────────┘
              │                        │
              ├────────────────────────┘
              ▼
          ( RETURN )
```

**INTERNATIONAL SEARCH REPORT**

| International application No. |
|---|
| **PCT/JP2024/013734** |

| A. | CLASSIFICATION OF SUBJECT MATTER |
|---|---|

*H02P 29/68*(2016.01)i
FI:   H02P29/68

According to International Patent Classification (IPC) or to both national classification and IPC

| B. | FIELDS SEARCHED |
|---|---|

Minimum documentation searched (classification system followed by classification symbols)

H02P29/68

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2013-139869 A (DENSO CORPORATION) 18 July 2013 (2013-07-18) paragraphs [0009]-[0069], fig. 1-16 | 1, 10-11 |
| Y | | 2-9, 12-13 |
| Y | JP 2018-74646 A (DENSO CORPORATION) 10 May 2018 (2018-05-10) paragraphs [0021]-[0060] | 2-8, 12-13 |
| Y | JP 4999395 B2 (DENSO CORPORATION) 15 August 2012 (2012-08-15) paragraph [0079] | 4-5 |
| Y | JP 2016-14435 A (DENSO CORPORATION) 28 January 2016 (2016-01-28) paragraph [0005] | 6 |
| Y | JP 2021-57946 A (MITSUBISHI ELECTRIC CORPORATION) 08 April 2021 (2021-04-08) paragraphs [0122]-[0123] | 9 |

☐ Further documents are listed in the continuation of Box C.       ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 June 2024** | **25 June 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

International application No.

**PCT/JP2024/013734**

| Patent document cited in search report | | | Publication date (day/month/year) | Patent family member(s) | | | Publication date (day/month/year) |
|---|---|---|---|---|---|---|---|
| JP | 2013-139869 | A | 18 July 2013 | US | 2013/0144478 | A1 | |
| | | | | paragraphs [0028]-[0186], fig. 1-16 | | | |
| JP | 2018-74646 | A | 10 May 2018 | (Family: none) | | | |
| JP | 4999395 | B2 | 15 August 2012 | US | 2008/0024081 | A1 | |
| | | | | paragraph [0092] | | | |
| | | | | DE | 102007000401 | A1 | |
| JP | 2016-14435 | A | 28 January 2016 | US | 2016/0003349 | A1 | |
| | | | | paragraph [0005] | | | |
| JP | 2021-57946 | A | 08 April 2021 | CN | 112583329 | A | |

Form PCT/ISA/210 (patent family annex) (July 2022)

**EP 4 697 585 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023064013 A
- JP 4999395 B